(19) Europäisches Patentamt
European Patent Office
Office européen des brevets

(11) EP 0 590 280 B1

## (12) EUROPÄISCHE PATENTSCHRIFT

(45) Veröffentlichungstag und Bekanntmachung des Hinweises auf die Patenterteilung:
**29.10.1997 Patentblatt 1997/44**

(51) Int Cl.⁶: **G01M 3/24**

(21) Anmeldenummer: **93112654.4**

(22) Anmeldetag: **06.08.1993**

(54) **Verfahren und Einrichtung zur Ultraschall-Leckage-Ortung**

Ultrasonic procedure and device for locating leaks

Procédé et dispositif ultrasonique de localisation d'une fuite

(84) Benannte Vertragsstaaten:
**BE CH DE ES FR GB LI NL SE**

(30) Priorität: **19.08.1992 DE 4227459**

(43) Veröffentlichungstag der Anmeldung:
**06.04.1994 Patentblatt 1994/14**

(73) Patentinhaber: **SIEMENS AKTIENGESELLSCHAFT 80333 München (DE)**

(72) Erfinder:
- **Kunze, Ulrich, Dr.**
  **D-91054 Erlangen (DE)**
- **Knoblach, Walter, Dr.**
  **D-91058 Erlangen (DE)**
- **Schulze, Günther, Dr.**
  **D-90768 Fürth (DE)**

(56) Entgegenhaltungen:
**EP-A- 0 140 174**      **FR-A- 2 503 363**

- **VGB KRAFTWERKSTECHNIK, Bd. 72, Nr. 6, Juni 1992, Essen DE, Seiten 514-517; P. JAX et al.: 'Neue leck-Detektions- und Ortungsverfahren für Rohrleitungen und Behälter'**
- **DATABASE INSPEC Nr. E007-7616-Y 1976, J.R. SABO : 'Detect buried steam leaks with acoustics'**

## Beschreibung

Die Erfindung bezieht sich auf ein Verfahren zur Ultraschall-Leckage-Ortung, bei dem die Schallpegel an verschiedenen Aufnehmerpositionen entlang einer Meßstrecke in einem Balkendiagramm dargestellt werden und bei dem der Schnittpunkt zweier Ausgleichsgraden zur Kennzeichnung der Leckageposition ermittelt wird. Die Erfindung bezieht sich weiterhin auf eine Einrichtung zur Ultraschall-Leckage-Ortung mit einer Anzahl von Ultraschall-Aufnehmern entlang einer Meßstrecke, wobei die Ausgänge der Aufnehmer über Verstärker und den Effektivwert bildende Komponenten mit einer Datenverarbeitungsanlage in Verbindung stehen, zur Darstellung der Schallpegel der verschiedenen Positionen der Aufnehmer in einem Balkendiagramm und zum Ermitteln des Schnittpunktes zweier Ausgleichsgraden zur Kennzeichnung der Leckage-Position.

Ein Verfahren und eine Einrichtung der eingangs genannten Art sind aus der EP-C-0 140 174, insbesondere Figur 5, und aus dem Prospekt "ALÜS Akustisches Leck-Überwachungssystem", Bestell-Nr. A19100-U653-A212, April 1990, der Siemens AG, Bereich Energieerzeugung, D-8520 Erlangen, bekannt.

Das hier betrachtete Verfahren zur akustischen Leckage-Überwachung basiert auf der Tatsache, daß durch ein Leck ausströmende und sich entspannende Flüssigkeiten, Dämpfe oder Gase Körperschall erzeugen. Diese Geräusche breiten sich in den betroffenen Komponenten (z.B. Rohrleitungen, Behältern, Pumpen, Ventilen) aus und werden von Schallwandlern oder Schallaufnehmern gemessen. Letztere sind an der Oberfläche der überwachten Komponenten in gewissen Abständen angebracht.

Als Meßgröße wird dabei der Effektiv- oder RMS-Wert der hochfrequenten Schallwandler-Signale benutzt. Während des Normalbetriebes verursachen die Strömungsgeräusche einen Untergrund-Signalpegel $E_o$. Das plötzliche Auftreten eines Lecks erzeugt einen Leckage-Geräuschpegel $E_L$ am Ort $x_i$ des Schallwandlers (i = 1, 2, ...), dessen Höhe von der Größe der Leckage und ihrer Entfernung vom Schallwandler abhängt. Der Gesamtgeräuschpegel $E_{L,o}$ am Ort $x_i$ eines Wandlers entsteht durch eine Überlagerung des Leckage-Geräusches und des Betriebs-Geräusches nach folgender Formel:

$$E_{L,o} = (E_o^2 + E_L^2)^{0,5}. \qquad (1)$$

Das bedeutet, daß eine Leckage, die am Ort $x_i$ des Schallaufnehmers den gleichen Geräuschpegel wie das Betriebsgeräusch erzeugt, den Gesamtgeräuschpegel um etwa 40 % erhöht; das ist ein Anstieg, der gut meßbar ist.

Für die Ortung des Lecks ist zunächst für jeden Meßort $x_i$ aus den gemessenen Schallpegeln der Aufnehmer der Anteil zu bestimmen, der durch das Leckgeräusch bestimmt wird. Das geschieht bekanntermaßen durch Subtraktion des Untergrundgeräusches $E_o^2$ der Anlage gemäß

$$E_L^2 = E_{L,o}^2 - E_o^2. \qquad (2)$$

Die Netto-Schallpegel $E_L^2$ an den i verschiedenen Orten $x_i$ entlang der Meßstrecke werden logarithmisch in einem Balkendiagramm dargestellt, und - sofern eine Leckage vorliegt - der Schnittpunkt zweier dann vorhandener Ausgleichsgeraden wird zur Kennzeichnung des Leckage-Ortes $x_L$ herangezogen.

Mit anderen Worten: Bei dem hier betrachteten Verfahren wird mit mehreren fest installierten Aufnehmern im Ultraschallbereich der Betriebs-Schallpegel (RMS-Wert) auf anomale Veränderungen überwacht. Der Frequenzbereich ist so gewählt, daß die über dem Betriebs-Schallpegel liegenden hochfrequenten Anteile des Leckgeräusches erfaßt werden, daß die niederfrequenten, mechanisch angeregten Schallwellen jedoch ausgefiltert werden. Im Normalbetrieb sind die RMS-Werte der einzelnen Aufnehmer weitgehend konstant; Leckagen dagegen verursachen einen Anstieg der Werte. Gemäß dem bekannten Verfahren wird hieraus für jeden Aufnehmer der ausschließlich auf die Leckage zurückgehende Anteil bestimmt; er nimmt mit zunehmendem Abstand vom Leck gesetzmäßig ab.

Wie bereits erwähnt, wird dieser Anteil logarithmisch als Funktion der einzelnen Aufnehmerorte $x_i$ in Form eines Balkendiagramms dargestellt. Längere oder sich verzweigende Rohrleitungen werden in Überwachungs-Abschnitte aufgeteilt, und für jeden Abschnitt wird ein solches Balkendiagramm erstellt. Ringförmige Strukturen werden "aufgetrennt", d.h. die Auftrennstelle wird als Anfangs- und Endpunkt einer linearen Struktur betrachtet.

Es hat sich gezeigt, daß sich bei ringförmigen Strukturen Ungenauigkeiten in der Bestimmung des Leckageortes ergeben können. Dies kann verschiedene Ursachen haben. Es besteht daher der Wunsch, auch bei solchen ringförmigen Strukturen eine möglichst genaue Leckortung durchzuführen.

Aufgabe der Erfindung ist es demnach, das Verfahren und die Einrichtung, die eingangs genannt wurden, dahingehend zu verbessern, daß eine genauere Leckage-Ortung bei ringförmigen Strukturen möglich ist.

Die Aufgabe, ein verbessertes Verfahren anzugeben, wird gemäß der Erfindung dadurch gelöst, daß zur Leckage-Ortung an einer ringförmigen Struktur an das Balkendiagramm dasselbe Balkendiagramm noch einmal angesetzt wird, daß derjenige Schallpegel herausgesucht wird, der den höchsten Wert besitzt und am weitesten in der Mitte der aneinandergesetzten Balkendiagramme liegt, daß um die zugehörige Aufnehmerposition herum ein Abschnitt mit einem vollständigen Satz von Aufnehmerpositionen herausgesucht wird, und daß für diesen Satz die beiden Ausgleichsgraden bestimmt werden, deren Schnittpunkt zur Kennzeichnung der Leckageposition ermittelt wird.

Beispielsweise wird zumindest derjenige Schallpegel, dessen Position der Leckageposition im wesentlichen gegenüberliegt, mit einem Korrekturwert versehen. Dieser Korrekturwert kann beispielsweise aus einem Datenspeicher abgerufen werden.

Die Aufgabe, eine verbesserte Einrichtung anzugeben, wird gemäß der Erfindung dadurch gelöst, daß zur Leckage-Ortung an einer ringförmigen Struktur die Datenverarbeitungsanlage derart ausgebildet ist, daß an das Balkendiagramm dasselbe Balkendiagramm noch einmal angesetzt wird, daß derjenige Schallpegel herausgesucht wird, der den höchsten Wert besitzt und am weitesten in der Mitte der aneinandergesetzten Balkendiagramme liegt, daß um die zugehörige Aufnehmerposition herum ein Abschnitt mit einem vollständigen Satz von Aufnehmerpositionen herausgesucht wird, und daß für diesen Satz die beiden Ausgleichsgraden bestimmt werden, deren Schnittpunkt zur Kennzeichnung der Leckageposition ermittelt wird.

Beispielsweise ist die Datenverarbeitungsanlage auch derart ausgebildet, daß sie Korrekturwerte für die Schallpegel gespeichert enthält und die Schallpegel entsprechend korrigiert.

Die Erfindung basiert somit auf der Überlegung, daß es zweckmäßig ist, eine Verbesserung bei der Ermittlung der Ausgleichsgraden zu erzielen. Durch die beispielsweise vorgenommene Korrektur desjenigen Schallpegels, dessen Position der Leckageposition im wesentlichen gegenüberliegt, wird die Überlagerung von Schall, der von einem Leck in entgegengesetztem Sinn über die ringförmige Struktur zu einem Aufnehmer läuft, kompensiert.

Ausführungsbeispiele der Erfindung werden im folgenden anhand von vier Figuren näher erläutert. Es zeigen:

Figur 1 eine ringförmige Struktur mit vier Ultraschall-Aufnehmerpositionen, einer Auftrennstelle und einer Leckstelle;
Figur 2 zwei aneinandergesetzte gleiche Balkendiagramme, bei denen die genannten RMS-Werte über der Ortskoordinate $x_i$ dargestellt sind;
Figur 3 eine ringförmige Struktur mit fünf Ultraschall-Aufnehmern und einer Leckstelle; und
Figur 4 ein zugehöriges Balkendiagramm, in dem überhöhte Ultraschallpegel bei demjenigen Aufnehmer eingetragen sind, der der Leckstelle gegenüber liegt.

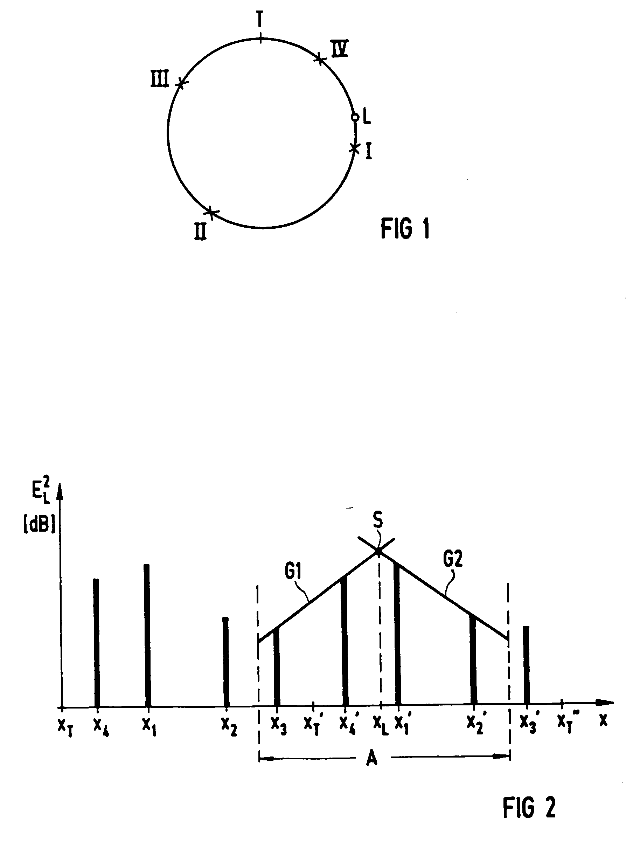

Bei Figur 1 ist der Einfachheit halber davon ausgegangen, daß Ultraschall-Aufnehmer I, II, III, IV entlang einer ringförmigen Überwachungsstrecke auf einer druckführenden Anlage (z.B. Primärkreis eines Kernkraftwerkes) an nur vier Meßpositionen oder Meßstellen $x_1$, $x_2$, $x_3$ und $x_4$ angebracht sind. In der Praxis werden aber z.B. 5 bis 10 solcher Meßpositionen überwacht. Eine Auftrennstelle ist mit T, eine Leckstelle mit L bezeichnet.

Vorliegend sind in Figur 2 die logarithmierten Schallpegel $E_L{}^2$ an jeder Meßposition $x_i$ in Form eines Balkens eingetragen. Das Diagramm beginnt bei $x_T = O$.

Bemerkenswert ist, daß an das ermittelte Balkendiagramm B1 noch einmal dasselbe Balkendiagramm in Form des Diagramms B2 angesetzt ist. Diese Vorgehensweise ist insbesondere dann zweckmäßig, wenn die Trennstelle T sich in der Nähe des Lecks L befindet. Denn dann läßt sich eine besonders bedeutsame Verbesserung der Leckortung erzielen.

Bei den beiden aneinander gesetzten Balkendiagrammen B1, B2 wird nun, zweckmäßigerweise mit Hilfe einer Rechenanlage, derjenige Schallpegel herausgesucht, der den höchsten Wert besitzt und der möglichst in der Mitte der gezeigten Darstellung liegt. Im vorliegenden Fall ist dies die Aufnehmerposition $x_1'$. Um diese Aufnehmerposition herum wird nun ein Abschnitt A herausgesucht, der einen vollständigen Satz von Aufnehmerpositionen $x_i$ beinhaltet. Im vorliegenden Fall sind dies die Aufnahmerpositionen $x_3$, $x_4'$, $x_1'$ und $x_2'$. In diesem Abschnitt A ist es nun mit relativ großer Genauigkeit möglich, die Ausgleichsgeraden G1 und G2 rechnerisch zu bestimmen. Der Schnittpunkt S dieser beiden Ausgleichsgeraden G1, G2 wird sodann ermittelt. Er beschreibt die Leckposition $x_L$.

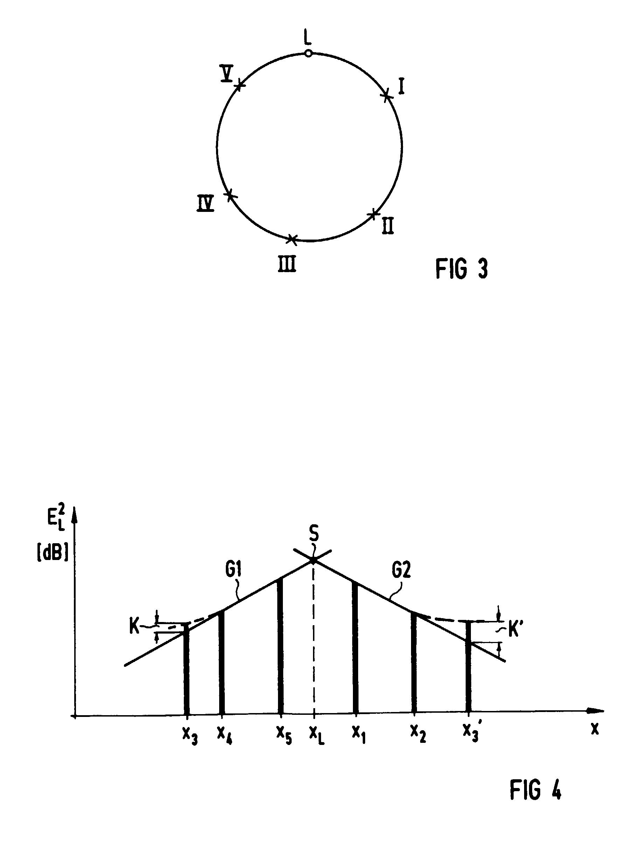

In Figur 3 ist eine weitere ringförmige Struktur dargestellt. Diese umfaßt insgesamt fünf Ultraschall-Aufnehmer I bis V. Bemerkenswert ist hier, daß eine Auftrennung nicht vorgenommen wurde. Das Leck ist auch hier wieder mit L bezeichnet.

In Figur 4 ist das zu Figur 3 gehörende Balkendiagramm dargestellt. Anzumerken ist hier, daß im Bereich des Ultraschall-Aufnehmers III eine Überhöhung des Leckgeräuschpegels auftritt, d. h. eine starke Abweichung von der jeweiligen Ausgleichsgeraden G1 bzw. G2. Diese Überhöhung ist auf eine unerwünschte Überlagerung der Leckgeräusche zurückzuführen, die auf dem Wege rechts herum und auf dem Wege links herum zu dem Ultraschall-Aufnehmer III gelangt sind. Mit anderen Worten: Eine solche unerwünschte Überlagerung macht sich insbesondere bei denjenigen Aufnehmern nachteilig bemerkbar, die der Leckstelle L gegenüberliegen.

Gemäß der Erfindung ist nun vorgesehen, daß mittels eines Korrekturwertes K bei jedem Aufnehmer, bei dem eine solche auf Leckgeräuschüberlagerung zurücktührende Überhöhung auftritt, der Schallpegel kompensiert wird. Wenn eine solche Kompensation durchgeführt ist, läßt sich der Leckageort $x_L$ mit besonderer Genauigkeit durch den Schnittpunkt S ermitteln. Vorliegend sind die Korrekturwerte K und K' bei den Positionen x und x' eingetragen.

Es soll demzufolge noch angemerkt werden, daß - je nach Einzelfall - durchaus auch eine Korrektur bei den benachbarten Aufnehmern, im vorliegenden Fall also bei den Aufnehmern II und IV, in Betracht kommt.

Die genannten Korrekturwerte K und K' etc. werden zweckmäßigerweise in einer Rechenanlage gespeichert und bei der Berechnung der Ausgleichsgeraden G1 und G2 zur Korrektur herangezogen. Solche Korrekturwerte K und K' lassen sich rechnerisch ermitteln; es ist aber auch möglich, sie experimentell zu ermitteln.

**Patentansprüche**

1. Verfahren zur Ultraschall-Leckage-Ortung, bei dem die Schallpegel an verschiedenen Aufnehmerpositionen entlang einer Meßstrecke in einem Balkendiagramm dargestellt werden und bei dem der Schnittpunkt zweier Ausgleichsgeraden zur Kennzeichnung der Leckage-Position ermittelt wird, **dadurch gekennzeichnet**, daß zur Leckage-Ortung an einer ringförmigen Struktur an das Balkendiagramm (B1) dasselbe Balkendiagramm (B2) noch einmal angesetzt wird, daß derjenige Schallpegel herausgesucht wird, der den höchsten Wert besitzt und am weitesten in der Mitte der aneinander gesetzten Balkendiagramme (B1, B2) liegt, daß um die zugehörige Aufnehmerposition ($x_I$) herum ein Abschnitt (A) mit einem vollständigen Satz von Aufnehmerpositionen ($x_i$) herausgesucht wird, und daß für diesen Satz die beiden Ausgleichsgeraden (G1, G2) bestimmt werden, deren Schnittpunkt (S) zur Kennzeichnung der Leckageposition ($x_L$) ermittelt wird.

2. Verfahren nach Anspruch 1, **dadurch gekennzeichnet**, daß zumindest derjenige Schallpegel, dessen Position ($x_{III}$) der Leckageposition ($x_L$) im wesentlichen gegenüberliegt, mit einem Korrekturwert (K) versehen wird.

3. Verfahren nach Anspruch 2, **dadurch gekennzeichnet**, daß der Korrekturwert (K) aus einem Datenspeicher abgerufen wird.

4. Einrichtung zur Ultraschall-Leckage-Ortung mit einer Anzahl von Ultraschall-Aufnehmern entlang einer Meßstrecke, wobei die Ausgänge der Aufnehmer über Verstärker und den Effektivwert bildende Komponenten mit einer Datenverarbeitungsanlage in Verbindung stehen, zur Darstellung der Schallpegel der verschiedenen Positionen der Aufnehmer in einem Balkendiagramm und zum Ermitteln des Schnittpunktes zweier Ausgleichsgraden zur Kennzeichnung der Leckage-Position, **dadurch gekennzeichnet**, daß zur Leckage-Ortung an einer ringförmigen Struktur die Datenverarbeitungsanlage derart ausgebildet ist, daß an das Balkendiagramm (B1) dasselbe Balkendiagramm (B2) noch einmal angesetzt wird, daß derjenige Schallpegel herausgesucht wird, der den höchsten Wert besitzt und am weitesten in der Mitte der aneinander gesetzten Balkendiagramme (B1, B2) liegt, daß um die zugehörige Aufnehmerposition ($x_I$) herum ein Abschnitt (A) mit einem vollständigen Satz von Aufnehmerpositionen ($x_i$) herausgesucht wird, und daß für diesen Satz die beiden Ausgleichsgeraden (G1, G2) bestimmt werden, deren Schnittpunkt (S) zur Kennzeichnung der Leckageposition ($x_L$) ermittelt wird.

5. Einrichtung nach Anspruch 4, **dadurch gekennzeichnet**, daß die Datenverarbeitungsanlage Korrekturwerte für die Schallpegel gespeichert enthält und die Schallpegel entsprechend korrigiert.

**Claims**

1. Method for ultrasonic leakage locating, in which method the sound levels at various pick-up positions along a measuring distance are represented in a bar graph, and in which method the point of intersection of two mean straight lines is established in order to identify the leakage position, characterised in that in order to locate a leakage at an annular structure, there is placed next to the bar graph (B1) once again the same bar graph (B2), in that the sound level that has the highest value and is the furthest in the middle of the bar graphs (B1, B2) which have been placed next to each other is sought, in that around the associated pick-up position ($x_I$) a section (A) having a complete set of pick-up positions ($x_i$) is sought, and in that for this set the two mean straight lines (G1, G2) are determined, the point of intersection (S) of which mean straight lines is established in order to identify the leakage position ($x_L$).

2. Method according to claim 1, characterised in that at least the sound level whose position ($X_{III}$) is substantially opposite the leakage position ($x_L$) is provided with a correction value (K).

3. Method according to claim 2, characterised in that the correction value (K) is retrieved from a data memory.

4. Device for ultrasonic leakage locating, having a number of ultrasonic pick-ups along a measuring distance, with the outputs of the pick-ups being connected to a computer by way of amplifiers and components which form the effective value, in order to represent the sound levels of the various positions of the pick-ups in a bar graph and in order to establish the point of intersection of two mean straight lines in order to identify the leakage position, characterised in that in order to locate a leakage at an annular structure, the computer is constructed in such a way that there is placed next to the bar graph (Bl) once again the same bar graph (B2), in that the sound level that has the highest value and is the furthest in the middle of the bar graphs (B1, B2) which have been placed next to each other is sought, in that around the associated pick-up position ($x_I$) a section (A) having a complete set of pick-up positions ($x_i$) is sought, and in that for this set the two mean straight lines (G1, G2) are determined, the point of intersection (S) of which mean straight lines is established in order to identify the leakage position ($X_L$)

5. Device according to claim 4, characterised in that the computer contains in a stored manner correction values for the sound levels and corrects the sound levels accordingly.

**Revendications**

1. Procédé de localisation d'une fuite par ultrasons, dans lequel on représente les niveaux sonores de différentes positions de capteur le long d'une section de mesure sous la forme d'un diagramme en bâtons et dans lequel on détermine le point d'intersection de deux droites égalisatrices pour identifier la position de la fuite, caractérisé en ce qu'en vue de la localisation d'une fuite sur une structure en forme d'anneau, on juxtapose au diagramme en bâtons (B1) le même diagramme en bâtons (B2), on recherche parmi les niveaux sonores celui qui possède la valeur maximale et qui se situe le plus près du centre des diagrammes en bâtons (B1, B2) juxtaposés, on recherche autour de la position de capteur ($x_I$) associée une section A qui comporte un groupe complet de positions de capteur ($x_i$) et on définit pour ce groupe les deux droites égalisatrices (G1, G2) dont on détermine le point d'intersection (S) pour identifier la position ($x_L$) de la fuite.

2. Procédé selon la revendication 1, caractérisé en ce qu'on applique au moins à celui des niveaux sonores, dont la position ($x_{III}$) est sensiblement opposée à la position ($x_L$) de la fuite, une valeur de correction (K).

3. Procédé selon la revendication 2, caractérisé en ce qu'on extrait la valeur de correction (K) d'une mémoire de données.

4. Dispositif de localisation d'une fuite par ultrasons, comportant un certain nombre de capteurs à ultrasons disposés le long d'une section de mesure, les sorties des capteurs étant reliées, par l'intermédiaire d'amplificateurs et de composants formant la valeur effective, à un système de traitement de données, pour représenter les niveaux sonores des différentes positions des capteurs sous la forme d'un diagramme en bâtons et pour définir le point d'intersection de deux droites égalisatrices afin de déterminer la position de la fuite, caractérisé en ce qu'en vue de la localisation d'une fuite sur une structure en forme d'anneau, le système de traitement de données est réalisé de telle sorte qu'on juxtapose au diagramme en bâtons (B1) le même diagramme en bâtons (B2), qu'on recherche parmi les niveaux sonores celui qui possède la valeur maximale et qui se situe le plus près du centre des diagrammes en bâtons (B1, B2) juxtaposés, qu'on recherche autour de la position de capteur ($x_I$) associée une section A qui comporte un groupe complet de positions de capteur ($x_i$) et qu'on définit pour ce groupe les deux droites égalisatrices (G1, G2) dont on détermine le point d'intersection (S) pour identifier la position ($X_L$) de la fuite.

5. Dispositif selon la revendication 4, caractérisé en ce que le système de traitement de données comporte dans sa mémoire des valeurs de correction pour les niveaux sonores et corrige les niveaux sonores en conséquence.

FIG 1

FIG 2

FIG 3

FIG 4